# EUROPÄISCHE PATENTSCHRIFT

(11) **EP 3 597 605 B1**
(45) Veröffentlichungstag und Bekanntmachung des Hinweises auf die Patenterteilung: **25.08.2021**
(21) Anmeldenummer: 19186227.5
(22) Anmeldetag: 15.07.2019
(51) Int. Cl.: C02F 1/46, C02F 1/463, C02F 5/02, C02F 1/461, C02F 103/02

(54) **VORRICHTUNG ZUR BEHANDLUNG VON FLÜSSIGKEITEN, INSBESONDERE ZUR BEHANDLUNG VON WASSER**
DEVICE FOR THE TREATMENT OF LIQUIDS, IN PARTICULAR FOR THE TREATMENT OF WATER
DISPOSITIF DE TRAITEMENT DE LIQUIDES, EN PARTICULIER POUR LE TRAITEMENT DE L'EAU

(30) Priorität: 20.07.2018 CH 9002018
(43) Veröffentlichungstag der Anmeldung: 22.01.2020
(73) Patentinhaber: WS Wasserenthärtung Schweiz GmbH, 6017 Ruswil (CH)
(72) Erfinder: IMHOF, Urs, 6017 Ruswil (CH)
(74) Vertreter: Keller Schneider Patent- und Markenanwälte AG (Zürich)

(56) Entgegenhaltungen:
- WO-A1-2005/042803
- DE-A1-102004 056 066
- GB-A- 2 279 663
- US-A1- 2015 284 275

## Beschreibung

### Technisches Gebiet

Die vorliegende Erfindung beschreibt eine Vorrichtung zur Behandlung von Flüssigkeiten, insbesondere zur Behandlung von stark kalkhaltigem Wasser, gemäss Oberbegriff des ersten Patentanspruches.

Die Wirkung der vorliegenden Wasserbehandlungsvorrichtungen beruht gemäss einem Aspekt der vorliegenden Erfindung auf einem elektrogalvanischen Prinzip, bei dem durch eine leitende Verbindung zwischen zwei unähnlichen Metallen aufgrund der unterschiedlichen Wertigkeiten dieser Metalle eines der beiden Metalle als eine Opferanode seine Metallionen in das Wasser freigibt. Dieses Grundprinzip ist an sich in Form der Opferanoden in den Heisswasserboilern bekannt.

Es hat sich herausgestellt, dass diese Metallionenfreigabe positive Wirkungen dadurch erzeugt, dass beispielsweise eine Korrosionsschutzschicht auf den Rohrinnenseiten eines Wasserleitungsnetzes aufgebaut werden kann, in dem sich eine derartige Wasserbehandlungsvorrichtung befindet.

Ebenso ist erwiesen, dass die Metallionenfreisetzung zu einer Agglomeration von Wasserinhaltsstoffen, beispielsweise kesselsteinbildenden Substanzen wie typischerweise Magnesiumcarbonat und Kalziumcarbonat, führt, wodurch sich gegenüber unbehandeltem Wasser eine erhöhte und vergrösserte Partikelgrösse der Wasserinhaltsstoffe ergibt - vermutlich durch Keimbildung an den Metallionen. Insbesondere durch die Vergrösserung der Wasserinhaltsstoffe durch eine Agglomeration wird erreicht, dass sich in dem folgenden Leitungsnetz weniger dieser Inhaltsstoffe absetzen können, so dass in einem Leitungsnetz, welches eine solche Wasserbehandlungsvorrichtung aufweist, der wirksame Innenquerschnitt der Rohre freigehalten werden kann von Ablagerungen. Ohne eine derartige Wasserbehandlungsvorrichtung ist eine Problematik erkennbar, dass Wasserleitungsrohre im Laufe der Zeit vom äusseren Rand her nach innen hin beispielsweise durch Kalkablagerungen beziehungsweise Kesselstein allmählich zuwachsen. Zudem können mit der Zeit mit den Wasserleitungen in Kontakt stehende, technische Geräte wie beispielsweise Kaffeemaschinen oder Waschautomaten, Sanitärinstallationen, funktionelle Oberflächen und dergleichen durch erhöhte Kalkgehalte im Wasser Schaden nehmen und müssen deshalb Kalkablagerungen geschützt werden.

### Stand der Technik

Allgemein ist aus dem Stand der Technik für die Behandlung von stark kalkhaltigem Wasser und zur Vermeidung von schädlichen Kalkablagerungen die Verwendung von, als Wasserenthärter fungierenden, Ionentauschern bekannt. Solche Ionentauscher sind dafür bekannt, zu hohe Gehalte von kesselsteinbildendem Kalziumionen beziehungsweise Magnesiumionen in Wasserleitungsrohren zu verhindern. Hierbei umfassen die Ionentauscher so genannte Ionen-Austauscherharze, welche effizient Kalziumionen und Magnesiumionen binden.

Allerdings haben solche Ionentauscher den Nachteil, dass Anschaffung und Betrieb von Ionentauscher teuer sind. Zudem müssen die Ionen-Austauscherharze in gewissen zeitlichen Abständen anhand so genannter Regeneriersalze behandelt werden, um die Aufnahmefähigkeit für Kalziumionen und Magnesiumionen wiederherzustellen. Dies generiert hohe Unterhaltskosten und ist zudem nicht besonders ökologisch.

Eine andere technische Lösung zur Entfernung hoher Gehalte von kesselsteinbildenden Kalziumionen und Magnesiumionen bilden Wasserbehandlungsvorrichtungen auf Basis von Elektromagneten und / oder Permanentmagneten (beispielsweise den Watercat®), wobei die Kalkstruktur derart verändert wird, so dass die kesselsteinbildenden Salze ausgeschwemmt werden. Diese Funktionsweise ist jedoch wissenschaftlich nicht nachgewiesen und wirkt in der Praxis oftmals nur unbefriedigend.

Die wesentliche Wirkung der vorliegenden Wasserbehandlungsvorrichtungen beruht in einem Aspekt der vorliegenden Erfindung auf einer ungestörten Freigabe von Metallionen der Opferanode, weshalb für einen optimalen Betrieb einer Wasserbehandlungsvorrichtung der vorliegenden Art sicher zu stellen ist, dass eine gleichmässige Metallionenfreigabe im Laufe der Betriebszeit gewährleistet bleibt.

Viele solche bekannten Wasserbehandlungsvorrichtungen haben jedoch in diesem Zusammenhang den Nachteil, dass die Opferanode im Laufe der Zeit durch Verschmutzungen ihre optimale Wirksamkeit verliert, so dass im Laufe der Zeit immer weniger Metallionen in das Wasser abgegeben werden und die positiven Wirkungen dieser bekannten Wasserbehandlungsvorrichtungen nachlässt.

Aus der WO 94/17000 A1 ist deshalb beispielsweise eine solche Vorrichtung zur Behandlung von Wasser bekannt, wobei die Vorrichtung einen Hohlkörper mit einer Kavität zum Durchleiten von Wasser umfasst und wobei innerhalb der Kavität eine ringförmig ausgestaltete, aus Zink gefertigte Opferanode mittels Presssitz angeordnet ist. Die notwendige elektrisch leitende Verbindung zwischen zwei unähnlichen Metallen wird bei der aus der WO 94/17000 A1 bekannten Wasserbehandlungsvorrichtung zwischen der Opferanode und dem als Hohlkörper ausgestalteten Gehäuse der Vorrichtung gewährleistet. Zusätzlich soll ein möglichst dauerhafter, von der Flüssigkeit unbeeinflusster Kontakt (auch «trockener» Kontakt genannt) zwischen der Opferanode und dem Hohlkörper mittels einem zu den Kontaktstellen hin dichtenden O-Ring gewährleistet werden.

Die aus der WO 94/17000 A1 bekannte Wasserbehandlungsvorrichtung adressiert die Problematik vieler solcher bekannter Vorrichtungen und weist als Kanaltrenner bezeichnete Wirbelkörper auf, welche durch ihre Ausgestaltung eine Wirbelbildung in der die Vorrichtung durchströmenden Flüssigkeit begünstigen und dadurch Verschmutzungen der Opferanode entgegengewirkt wird.

Im Weiteren ist aus der WO 2004/108606 A1 eine weitere Wasserbehandlungsvorrichtung bekannt, welche ebenfalls mittels geeigneter Anbringung von, in der Wasserströmung Wirbel verursachenden, Wirbelkörpern Verschmutzungen an der Opferanode reduziert beziehungsweise durch die verwirbelte Wasserströmung eine Reinigung der Opferanode erzielt.

Die notwendige elektrisch leitende Verbindung zwischen zwei unähnlichen Metallen wird bei der aus der WO 2004/108606 A1 bekannten Wasserbehandlungsvorrichtung ebenfalls zwischen der Opferanode und dem als Hohlkörper ausgestalteten Gehäuse bzw. Hülse der Vorrichtung gewährleistet.

Diese bekannten Wasserbehandlungsvorrichtungen haben den Nachteil, dass die Anbringung der Wirbelkörper viel Platz einnimmt in der Wasserbehandlungsvorrichtung, was gleichzeitig zu einer komplizierten Ausgestaltung der Wasserbehandlungsvorrichtung führt. Diese aus WO 94/17000 A1 bzw. WO 2004/108606 A1 bekannten Wasserbehandlungsvorrichtungen haben den weiteren Nachteil, dass deren Instandhaltung beziehungsweise die Instandhaltung des Wasserleitungsnetzes mit einem grossen Aufwand und deshalb mit erhöhten Servicekosten verbunden ist. Es hat sich zudem als sehr nachteilig gezeigt, dass bei solchen aus WO 94/17000 A1 bzw. WO 2004/108606 A1 bekannten Wasserbehandlungsvorrichtungen sich durch die zunehmenden Verschmutzungen der Innendurchmesser des als Hohlkörper ausgestalteten Gehäuses leicht verringert, sodass eine verbrauchte Opferanode nur mit zerstörerischer Gewalt aus der Position gepresst werden kann. Dies hat zur Folge, dass eine Weiternutzung der gesamten Wasserbehandlungsvorrichtung nicht mehr möglich ist und das Gehäuse einschliesslich der mindestens einen Opferanode müssen immer und regelmässig neu ersetzt und wieder aufwändig in die Hauptleitung verschraubt werden, was typischerweise eine Unterbrechung der Wasserzufuhr von einigen Stunden zur Folge hat. Dies ist teuer und generiert viel teuren Abfall.

Aus DE102004056066 und WO2005042803 sind Wasserbehandlungsvorrichtungen bekannt, bei denen eine Opferanode in einer seitlichen Bohrung quer zur Flussrichtung des Wassers eingesetzt und befestigt ist.

### Darstellung der Erfindung

Die vorliegende Erfindung hat sich zur Aufgabe gestellt, eine verbesserte Vorrichtung zur Behandlung einer Flüssigkeit, insbesondere Wasser, bereitzustellen, bei welcher insbesondere die Instandhaltung des Wasserleitungsnetzes vereinfacht ist, eine preiswerte und ökologische Lösung darstellt und die Wasserleitung sowie Endgeräte besonders geschont werden.

Diese Aufgaben werden durch eine Vorrichtung mit den Merkmalen des Patentanspruches 1 gelöst, die alle wesentliche Merkmale der Erfindung umfasst. Weitere, bevorzugte Ausführungsformen sind in den abhängigen Ansprüchen 2-15 enthalten.

Erfindungsgemäss mehrere metallische Opferanoden über mehrere zusätzliche Bohrungen in die Kavität in den Hohlkörper einbringbar und befestigbar, insbesondere einschraubbar, so dass die Opferanoden mit dem Hohlkörper verbunden sind.

Im Sinne der vorliegenden Erfindung wird als zusätzliche Bohrung verstanden, dass neben den den Einlass beziehungsweise den Auslass bildenden Öffnungen oder Bohrungen mindestens eine weitere zusätzliche, vorzugsweise seitliche, d.h. an einer Seitenfläche des Hohlkörpers vorgesehene, Bohrung zur Einbringung mindestens einer metallischen Opferanode vorgesehen ist. Die mindestens eine Opferanode kann einen beliebigen Querschnitt aufweisen, d.h. beispielsweise quadratisch, rechteckig, rund etc., und beispielsweise auch die Form eines Kegels oder Konus aufweisen.

Die erfindungsgemässe Vorrichtung zur Behandlung von Wasser hat den Vorteil, dass bei übermässigem Verschleiss der Opferanode kein Ausbau beziehungsweise Demontage der ganzen Vorrichtung oder Opferanodenanordnung notwendig ist und durch die zusätzliche Bohrung in kurzer Zeit alleinig die von aussen leicht zugängliche, verbrauchte Opferanode ausgetauscht werden kann, weshalb die Verschraubung zu den Leitungsrohren hin nur noch eine untergeordnete Rolle spielt. Mit anderen Worten muss bei der erfindungsgemässen Vorrichtung die mindestens eine Opferanode nicht von der Einlassbeziehungsweise Auslassseite in den als Gehäuse ausgestalteten Hohlkörper geschoben werden.

Dadurch wird die Instandhaltung der Wasserbehandlungsvorrichtung wesentlich vereinfacht. Es hat sich gezeigt, dass bei der erfindungsgemässen Vorrichtung für den Austausch einer Opferanode die Wasserzufuhr lediglich wenige Minuten unterbrochen werden muss, während dieser Vorgang bei den bekannten Wasserbehandlungsvorrichtungen einige Stunden dauert. Als weiterer Vorteil kann angeführt werden, dass auch ohne grossen Aufwand eine Überprüfung des Zustands der Opferanoden durchgeführt werden kann.

Zudem müssen üblicherweise bei übermässigem Verschleiss der Opferanode die bekannten Wasserbehandlungsvorrichtungen aufgrund des komplizierten Aufbaus gleich vollständig ersetzt werden. Bei der erfindungsgemässen Vorrichtung brauchen jedoch lediglich die Opferanoden ersetzt werden, während die restlichen Bestandteile der erfindungsgemässen Vorrichtung weiterverwendet werden können.

Weitere vorteilhafte Ausgestaltungsformen sind in den abhängigen Patentansprüchen angegeben.

Vorzugsweise ist die mindestens eine metallische Opferanode die Kavität querend im Hohlkörper einbringbar und befestigbar, so dass die mindestens eine metallische Opferanode idealerweise im Wesentlichen vertikal zur durchströmenden Flüssigkeit angeordnet ist. Durch diese Anordnung kann vorteilhaft die Opferanode selbst als Wirbelkörper fungieren, wodurch platzsparend auf weitere zusätzliche Wirbelkörper verzichtet werden könnte. Bei den aus der WO 94/17000 A1 bzw. aus der WO 2004/108606 A1 bekannten Wasserbehandlungsvorrichtungen findet im Gegensatz eine Verwirbelung lediglich vor oder nach der Opferanode statt.

Dennoch ist es denkbar, dass beispielsweise in Fliessrichtung der durchströmenden Flüssigkeit betrachtet vor und / oder nach der mindestens einen metallischen Opferanode mindestens ein aus Polyoxymethylen (POM) oder PTFE oder dergleichen gefertigter Wirbelkörper in der Kavität des Hohlkörpers angeordnet ist. Erfindungsgemäß umfasst die erfindungsgemässe Vorrichtung mehrere, besonders bevorzugt mindestens zwei benachbarte, in Serie nacheinander, d.h. im Wesentlichen entlang der Längsachse der erfindungsgemässen Vorrichtung, angeordnete Bohrungen für die Opferanoden. Das Einbringen mindestens zweier nacheinander angeordneter Opferanoden verstärkt vorteilhaft die Wirbelbildung in der die Kavität passierenden Flüssigkeit.

Im Sinne einer bevorzugten Weiterbildung der vorliegenden Erfindung handelt es sich bei dem verwendeten Metall des Hohlkörpers idealerweise um Messing oder Bronze. Bevorzugt besteht die Opferanode aus reinem Zink. Die Opferanode kann jedoch auch aus einem anderen Material gefertigt sein. Mit anderen Worten sollen Materialpaarungen gewählt werden, so dass aufgrund der unterschiedlichen Wertigkeiten dieser Metalle eines der beiden Metalle als eine Opferanode mit kleinerem Standardpotential seine Metallionen in das Wasser freigibt. Typischerweise entsteht durch die unterschiedlichen Wertigkeiten des Metalls des Hohlkörpers und des Metalls der mindestens einen Opferanode und dem Elektrolyt Wasser ein Spannungsunterschied von rund 500 Millivolt bis zu einem Volt.

Gemäss einer weiteren, bevorzugten Ausführungsform kann die erfindungsgemässe Vorrichtung zusätzliche Mittel zur Erhöhung des Spannungsunterschieds umfassen. Vorzugsweise wird dieses Mittel zur Erhöhung der Spannung durch eine erste Stromleitung zwischen einer zusätzlichen, elektrischen Energiequelle und einer jeweiligen Opferanode sowie einer zweiten Stromleitung zwischen dem Hohlkörper und der zusätzlichen, elektrischen Energiequelle realisiert.

Ein weiterer Aspekt betrifft eine Vorrichtung zur Behandlung von Flüssigkeiten, insbesondere zur Behandlung von, insbesondere kalkhaltigem, Wasser innerhalb eines Wasserleitungsnetzes, umfassend:
- einen, insbesondere metallischen, Hohlkörper,
- einen, durch eine Bohrung im Hohlkörper gebildeten, Einlass,
- einen, durch eine Bohrung im Hohlkörper gebildeten, Auslass,
- mindestens eine metallische Opferanode,
wobei im Hohlkörper zwischen dem Einlass und dem Auslass eine Kavität zum Durchleiten der Flüssigkeit ausgebildet ist, und wobei die Vorrichtung zusätzliche Mittel zur Erhöhung des Spannungsunterschieds umfasst.

Im Sinne dieses weiteren Aspekts ist die Vorrichtung mit mindestens einer, dem Gehäuse bzw. Hohlkörper gegenüber vollständig isolierten Opferanode versehen zur Verringerung des Risikos eines Kurzschlusses, die im Verhältnis der Fliessgeschwindigkeit der durchströmenden Flüssigkeit mit Spannung gespiesen wird.

Dies erlaubt vorteilhaft, dass die Spannung durch die zusätzliche, elektrische Energiequelle je nach gemessener Fliessgeschwindigkeit einstellbar ist. Diese einstellbare Spannung hat wiederum den weiteren Vorteil, dass beispielsweise bei grösseren Gebäuden mit unregelmässigem Wasserverbrauch eine verbrauchsoptimierten Metallionenfreisetzung und erwähnte Agglomeration bzw. Umformung von Wasserinhaltsstoffen des zu behandelnden Wassers, beispielsweise kesselsteinbildenden Substanzen wie typischerweise Magnesiumcarbonat und Kalziumcarbonat, ermöglicht wird.

Besonders bevorzugt umfasst die Vorrichtung beim Einlass und / oder beim Auslass einen Absperrhahn, beispielsweise in Form eines Kugelhahns oder dergleichen, wobei der Absperrhahn ein Durchleiten der Flüssigkeit durch die Kavität des Hohlkörpers verhindert. Dies hat den besonderen Vorteil, dass bei einem Opferanodenwechsel kein, das gesamte Wasserleitungsnetz unterbrechender Haupthahn betätigt werden muss und dadurch der Arbeitsaufwand zusätzlich verringert werden kann. Mit anderen Worten ist dadurch ein Wechsel der Opferanode schnell ausführbar und die Servicekosten lassen sich tief halten.

Vorzugsweise umfasst die Vorrichtung beim Auslass ein verkehrt herum angeordnetes Rückschlagventil.

Ein weiterer Aspekt der vorliegenden Erfindung betrifft ein System umfassend eine Vielzahl von erfindungsgemässen Vorrichtungen, wobei die Vorrichtungen anhand eines, einfachen oder doppelten, Y-Verbindungstücks parallel zueinander geschaltet werden und wobei in der parallelen Schaltung eine zweite oder weitere Vorrichtung beim Auslass ein verkehrt angeordnetes Rückschlagventil umfasst, während eine erste Vorrichtung kein Rückschlagventil aufweist. Ein solches System hat den Vorteil, dass bei einem stark in der Menge schwankenden Wasserleitungsnetz erst bei Erreichen eines kritischen Unterdrucks auf der Auslassseite der Vorrichtung (d.h. nach der Vorrichtung) das verkehrt angeordnete Rückschlagventil öffnet und somit erst dann bedarfsmässig die zweite beziehungsweise weitere Vorrichtung zugeschaltet werden.

Im Falle der Verwendung eines doppelten Y-Verbindungstücks werden bevorzugt typischerweise zwei verkehrt angeordnete Rückschlagventile jeweils pro Y-Verbindungsstück verwendet, wobei besonders bevorzugt die zwei verkehrt angeordneten Rückschlagventile derart mit einer unterschiedlichen Federspannung versehen sind, so dass bei unterschiedlichen, kritischen Unterdrücken die zwei verkehrt angeordneten Rückschlagventile bedarfsmässig nacheinander öffnen.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben. Es zeigen:
- Fig. 1a: eine perspektivische Ansicht einer ersten bevorzugten Ausführungsform der erfindungsgemässen Vorrichtung zur Wasserbehandlung;
- Fig. 1b: eine perspektivische Ansicht einer weiteren, zweiten bevorzugten Ausführungsform der erfindungsgemässen Vorrichtung zur Wasserbehandlung;
- Fig. 1c: eine perspektivische Ansicht der weiteren, zweiten bevorzugten Ausführungsform der erfindungsgemässen Vorrichtung zur Wasserbehandlung mit hier drei einschraubbaren Opferanoden;
- Fig. 2: eine schematische Explosionszeichnung einiger zusammenzusetzender Bestandteile der ersten bevorzugten Ausführungsform der erfindungsgemässen Vorrichtung zur Wasserbehandlung;
- Fig. 3: eine vom Einlass her betrachtete Frontansicht einer bevorzugten Ausführungsform der erfindungsgemässen Vorrichtung zur Wasserbehandlung;
- Fig. 4a: eine schematische Seitenansicht eines ersten, bevorzugten Typs einer Opferanode für die erfindungsgemässe Vorrichtung zur Wasserbehandlung;
- Fig. 4b: eine schematische Seitenansicht eines zweiten, bevorzugten Typs einer Opferanode für die erfindungsgemässe Vorrichtung zur Wasserbehandlung;
- Fig. 5a: eine perspektivische Ansicht einer weiteren, dritten bevorzugten Ausführungsform der erfindungsgemässen Vorrichtung zur Wasserbehandlung mit einer zusätzlichen elektrischen Energiequelle;
- Fig. 5b: eine schematische Explosionszeichnung einiger zusammenzusetzender Bestandteile der weiteren, dritten bevorzugten Ausführungsform der erfindungsgemässen Vorrichtung zur Wasserbehandlung mit einer zusätzlichen elektrischen Energiequelle;
- Fig. 6: eine schematische Ansicht eines Systems mit einer Vielzahl erfindungsgemässer Vorrichtungen.

### Beschreibung

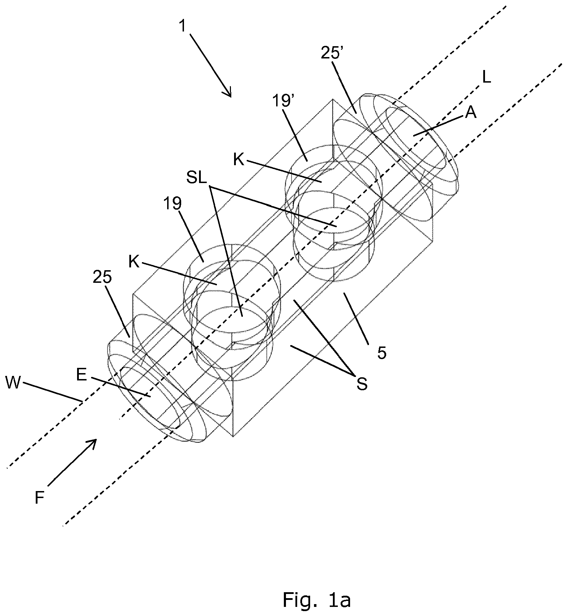

**Fig.1a** zeigt eine perspektivische Ansicht einer bevorzugten Ausführungsform der erfindungsgemässen Vorrichtung 1 zur Wasserbehandlung.

Die Vorrichtung 1 umfasst einen Gehäuse bildenden Hohlkörper 5 mit einer sich von einem Einlass E bis zu einem Auslass A sich erstreckenden Kavität K. Der Einlass E beziehungsweise der Auslass A werden mit anderen Worten durch jeweils eine Bohrung in den Hohlkörper 5 gebildet, wodurch eine mittels eines Pfeils angedeutete, ein Wasserleitungsnetz W durchströmende Flüssigkeit F, insbesondere Wasser, zwischen Einlass E und Auslass A durchgeleitet werden kann.

Ein hier nicht sichtbarer, beim Einlass E mit dem Hohlkörper 5 verbundener Einlassflansch ist anhand eines ersten Anschlussstücks 25 mit dem Wasserleitungsnetz W verbunden, während beim Auslass A ein ebenfalls hier nicht sichtbarer mit dem Hohlkörper 5 verbundener Auslassflansch anhand eines zweiten Anschlussstücks 25' mit dem Wasserleitungsnetz W verbunden ist.

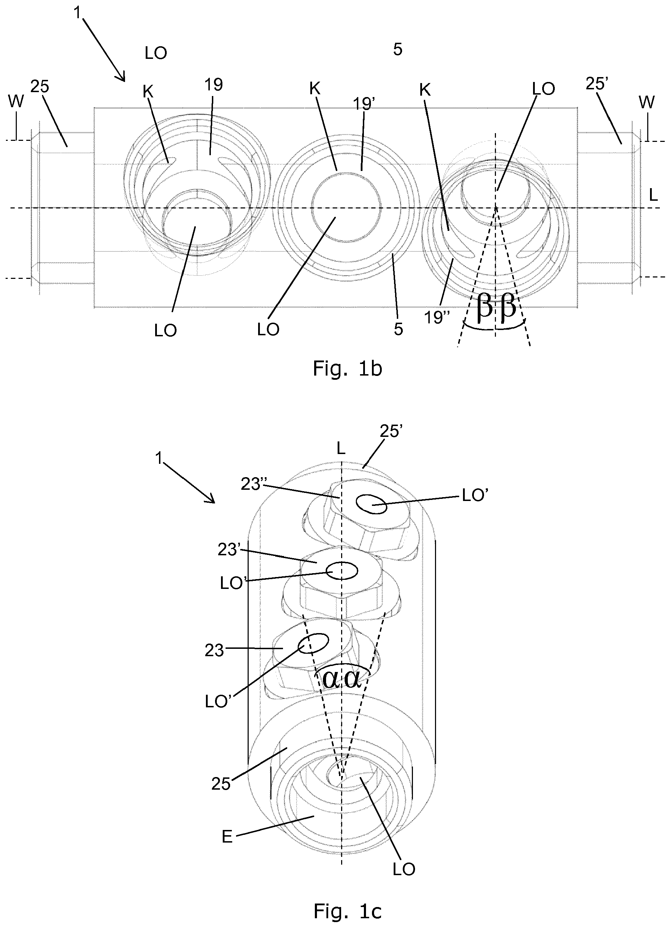

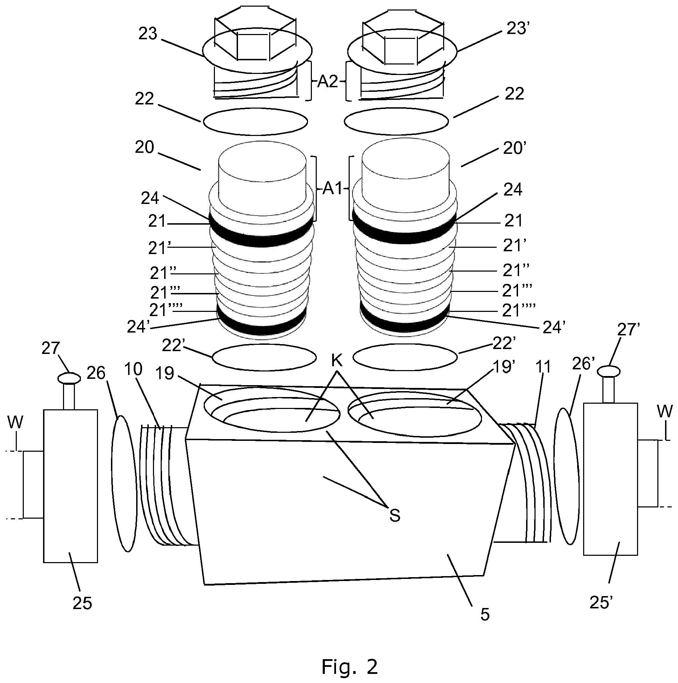

Der hier gezeigte Hohlkörper 5 weist beispielhaft im Wesentlichen eine Quaderform auf, kann jedoch alternativ auch eine Zylinderform aufweisen (siehe Fig. 1b und 1c). Im Weiteren weist der Hohlkörper 5 hier zwei seitliche, d.h. an einer Seitenfläche S des Hohlkörpers 5 vorgesehene, Bohrungen 19; 19' zur Einbringung mindestens einer metallischen Opferanode (siehe Fig. 2) auf, wobei diese Bohrungen 19; 19' jeweils in einem Sackloch SL enden. Im Falle eines alternativ als Zylinder ausgestalteten Hohlkörpers 5 können beispielsweise die Bohrungen 19; 19' seitlich auf der Mantelfläche vorgesehen sein und beispielsweise - wie in Fig.1b bzw. 1c gezeigt - auf der Mantelfläche um einige Winkelgrade seitlich gegeneinander verdrehte, nacheinander folgende Bohrungen 19; 19' aufweisen. Grundsätzlich kann der Hohlkörper 5 jegliche Form aufweisen und definiert sich allgemein als ein beliebig ausgestalteter Körper mit einer Aussenhülle und einem Hohlraum zum Durchleiten der Flüssigkeit F, wobei der Hohlkörper 5 als Gussteil oder anhand eines anderen Herstellungsverfahrens hergestellt werden.

Bei der hier gezeigten, bevorzugten Ausführungsform sind zwei metallische, im Wesentlichen zylinderförmige Opferanoden über die zwei zusätzliche Bohrungen 19; 19' in die Kavität K im Hohlkörper 5 einbringbar und befestigbar, insbesondere einschraubbar (siehe Fig. 2). Aufgrund der vorteilhaften, einfachen Austauschbarkeit der verbrauchten Opferanoden und den möglichen Verzicht auf eine Demontage der gesamten Vorrichtung 1 kann alternativ zwischen der Vorrichtung 1 und dem Wasserleitungsnetz W beim Einlass E und / oder Auslass A eine Festverbindung vorhanden sein, d.h. es kann mit anderen Worten beim Einlass E auf einen Einlassflansch sowie ein erstes Anschlussstück 25 und / oder beim Auslass A auf einen Auslassflansch sowie ein zweites Anschlussstück 25' als Verbindung mit Wasserleitungsnetz W verzichtet werden.

Die vorliegende bevorzugte Ausführungsform zeigt zwei benachbarte, in Serie nacheinander, d.h. im Wesentlichen entlang der Längsachse L der Vorrichtung 1, angeordnete Bohrungen 19; 19' für die Opferanoden. Das Einbringen zweier nacheinander angeordneter Opferanoden verstärkt vorteilhaft die Wirbelbildung in der die Kavität K passierenden Flüssigkeit F.

Um eine Verwirbelung weiter zu fördern ist es auch denkbar, dass die beiden benachbarten Bohrungen 19; 19' nicht entlang der Längsachse L, sondern teilweise seitlich versetzt beziehungsweise alternierend an verschiedenen Seitenflächen S angeordnet sind. Im Falle eines alternativ als Zylinder ausgestalteten Hohlkörpers 5 können die nacheinander folgenden Bohrungen 19; 19' auf der Mantelfläche um einige Winkelgrade seitlich gegeneinander versetzt oder verdreht angeordnet sein, vorzugsweise um einen Verdrehwinkel α von 10° bis 30° wie in Fig. 1b bzw. 1c anhand einer weiteren bevorzugten Ausführungsform gezeigt. Eine solche seitliche Versetzung oder Verdrehung begünstigt zusätzlich eine besonders ausgeprägte Wirbelbildung in der die Kavität K passierenden Flüssigkeit F.

Bei der in Fig. 1a gezeigten, bevorzugten Ausführungsform erstrecken sich die Bohrungen 19; 19' im Wesentlichen senkrecht zur Seitenfläche S in Richtung der Kavität K des Hohlkörpers 5, wodurch auch die einzusetzenden, hier nicht gezeigten Opferanoden senkrecht, d.h. 90°, zur Seitenfläche S platzierbar sind. Alternativ ist es jedoch auch denkbar, dass zur Seitenfläche S beliebig angewinkelte Bohrungen 19; 19' vorgesehen sind, so dass die hier nicht gezeigten Opferanoden angewinkelt zur Seitenfläche platzierbar sind, d.h. um einen von 90° abweichenden Winkel. Durch ein solches Anwinkeln der zu platzierenden Opferanoden kann die Verwirbelung der anströmenden Flüssigkeit F begünstigt werden.

Zur weiteren Optimierung der Wirbelbildung können die einen runden oder eckigen Querschnitt aufweisenden Opferanoden auf den Seitenflächen beziehungsweise Mantelfläche mit zusätzlichen Schlitzen versehen sein, welche sich entlang der Längsachse L oder in einem Winkel zur Längsachse L erstreckend oder eine Wellenform aufweisend ausgestaltet sind. Alternativ oder zusätzlich können die Opferanoden zentrisch und / oder exzentrisch mit zusätzlichen Bohrungen für eine zusätzliche Durchströmung der Flüssigkeit versehen sein.

Im Zusammenhang mit einer optimalen Verwirbelung kann zudem die erfindungsgemässe Vorrichtung derart ausgestaltet und dimensioniert sein, so dass in Fliessrichtung der durchströmenden Flüssigkeit F betrachtet vor und / oder nach der mindestens einen metallischen, zu platzierenden Opferanode mindestens ein aus Polyoxymethylen (POM), PTFE, Edelstahl oder dergleichen gefertigter Wirbelkörper in der Kavität des Hohlkörpers angeordnet werden kann.

Von hier an und im Folgenden bezeichnen gleiche Referenzzeichen gleiche Komponenten in den Figuren.

**Fig. 1b** zeigt eine perspektivische Ansicht einer weiteren zweiten bevorzugten Ausführungsform der erfindungsgemässen Vorrichtung 1 zur Wasserbehandlung mit einem als Zylinder ausgestalteten Hohlkörper 5.

Ein hier nicht sichtbarer, beim Einlass E mit dem Hohlkörper 5 verbundener Einlassflansch ist anhand eines ersten Anschlussstücks 25 mit dem Wasserleitungsnetz W verbunden, während beim Auslass A ein ebenfalls hier nicht sichtbarer mit dem Hohlkörper 5 verbundener Auslassflansch anhand eines zweiten Anschlussstücks 25' mit dem Wasserleitungsnetz W verbunden ist.

Bei der hier gezeigten, zweiten bevorzugten Ausführungsform sind beispielhaft drei metallische, im Wesentlichen zylinderförmige Opferanoden über die drei zusätzlichen Bohrungen 19; 19'; 19" in die Kavität K im Hohlkörper 5 einbringbar und befestigbar.

Bei der hier gezeigten, zweiten bevorzugten Ausführungsform sind die Bohrungen 19; 19'; 19" auf der Mantelfläche um einige Winkelgrade seitlich gegeneinander um die Längsachse L herum verdreht angeordnet (siehe auch Fig. 1c). Alternativ oder zusätzlich ist es zudem denkbar, dass die Bohrungen 19; 19'; 19" und damit der eingeschraubten Opferanoden 20; 20'; 20" quer zur Längserstreckung der Längsachse L gekippt sind, wie hier anhand des Kippwinkels β in Durchströmrichtung oder entgegen der Durchströmrichtung angedeutet wird. Beispielsweise ist es denkbar, dass drei nachfolgende, eingeschraubte Opferanoden alternierend in Durchströmrichtung bzw. entgegen der Durchströmrichtung gekippt (und allenfalls zusätzlich seitlich verdreht) angeordnet sind.

**Fig. 1c** zeigt eine perspektivische Ansicht der weiteren bevorzugten Ausführungsform der erfindungsgemässen Vorrichtung 1 zur Wasserbehandlung mit hier drei einschraubbaren Opferanoden.

Die hier gezeigte, zweite bevorzugte Ausführungsform zeigt zudem beispielhaft jeweils einen ersten Lochdurchgang LO in den Sacklöchern SL und jeweils einen zweiten Lochdurchgang LO' in den Deckelelementen 23; 23'; 23", wobei anhand einer hier nicht gezeigten, vom zweiten Lochdurchgang LO' zum ersten Lochdurchgang LO und durch eine Bohrung in den hier nicht gezeigten Opferanoden sich erstreckende Gewindeschraube und einer korrespondierenden Mutter die Opferanoden mit dem Hohlkörper 5 verbunden werden. Mit anderen Worten erstreckt sich die Gewindeschraube im Wesentlichen quer durch den Hohlkörper 5. Vorzugsweise wird anhand von in Fig. 2 genauer erläuterten, oberen und unteren Tellerfedern ein ausreichend hoher Anpressdruck erreicht. Im Weiteren sind hier bevorzugt anhand von Fig. 2 genauer erläuterte, obere O-Ringe sowie untere O-Ringe angeordnet zur Abdichtung.

Bei dem hier gezeigten, als Zylinder ausgestalteten Hohlkörper 5 können die nacheinander folgenden Bohrungen 19; 19' und damit der einschraubbaren Opferanoden auf der Mantelfläche um einige Winkelgrade seitlich gegeneinander um die Längsachse L herum verdreht angeordnet sein, vorzugsweise um einen Verdrehwinkel α von 10° bis 30° gegenüber der jeweils benachbarten Opferanode.

Es hat sich hierbei als besonders vorteilhaft gezeigt, dass die Verwirbelung besonders gefördert wird durch mindestens zwei, hier drei, hintereinander angeordnete, um einige Grade verdrehte Opferanoden 20; 20'; 20". Da das vorbei fliessende Flüssigkeit bzw. Wasser durch hier nicht gezeigten Rillen und / oder Schlitzen und / oder zusätzlichen zentrischen oder exzentrischen Bohrungen der Opferanoden 20; 20'; 20" geleitet wird, muss die die Kavität K durchströmende Flüssigkeit F gezwungenermassen die Fliessrichtung zur nächsten, um einige Grade verdrehten Opferanode 20; 20'; 20" mit dessen Rillen und / oder Schlitzen und / oder zusätzlichen zentrischen oder exzentrischen Bohrungen ändern, wodurch eine besonders ausgeprägte Wirbelbildung begünstigt wird. Die Verdrehung kann wie in Fig. 1c gezeigt gleichmässig um die axial sich erstreckende Längsachse L der Vorrichtung 1 ausgebildet sein oder bewusst exzentrisch gewählt werden.

Die mit der Wirbelbildung im Zusammenhang entstehende Reibung resultiert in einer verstärkten Verhinderung von Verunreinigungen der Opferanoden 20; 20'; 20".

**Fig. 2** zeigt eine schematische Explosionszeichnung einiger zusammenzusetzender Bestandteile einer bevorzugten Ausführungsform der erfindungsgemässen Vorrichtung 1 zur Wasserbehandlung mit einer rein elektrogalvanischen Wirkungsweise ohne eine zusätzliche elektrische Energiequelle.

Die Vorrichtung 1 umfasst einen beim Einlass E mit dem Hohlkörper 5 verbundenen Einlassflansch 10, wobei anhand eines ersten Anschlussstücks 25 und eines ersten Dichtungsrings 26 eine dichte Verbindung mit dem Wasserleitungsnetz W erzielbar ist. Gleichsam umfasst die Vorrichtung 1 einen beim Auslass A mit dem Hohlkörper 5 verbundenen Auslassflansch 11, wobei anhand eines zweiten Anschlussstücks 25' und eines zweiten Dichtungsrings 26' eine dichte Verbindung mit dem Wasserleitungsnetz W erzielbar ist.

Optional kann Vorrichtung 1 beim Einlass (E) hier beim ersten Anschlussstück 25 einen ersten Absperrhahn 27 und / oder beim Auslass A hier beim zweiten Anschlussstück 25' einen zweiten Absperrhahn 27' umfassen, wobei der Absperrhahn 27; 27' ein Durchleiten der Flüssigkeit F durch die Kavität K des Hohlkörpers 5 verhindert.

Die zwei Bohrungen 19; 19' weisen hier jeweils ein Innengewinde auf, welches mit jeweils einem korrespondierenden, an Deckelelementen 23; 23' vorgesehenen Aussengewinde ein Einschrauben der Deckelelemente 23; 23' zur Befestigung beziehungsweise Fixierung der beiden Opferanoden 20; 20' in der Kavität K des Hohlkörpers 5 ermöglichen.

Hierbei umfassen die Deckelelemente 23; 23' einen angeformten, zweiten Abschnitt A2 auf mit einem, durch eine Kavität gebildeten, Aufnahmebereich, wobei ein korrespondierender erster Abschnitt A1 in den Aufnahmebereich des zweiten Abschnitts A2 aufnehmbar ist.

Eine obere, zwischen Deckelelement 23; 23' und einer Seitenfläche S des Hohlkörpers 5 anbringbare, Tellerfeder 22 und eine untere, vorzugsweise im Sackloch SL aufnehmbare, Tellerfeder 22' erlauben hier im eingeschraubten Zustand der Deckelelemente 23; 23' einen ausreichend hohen Anpressdruck zwischen den Deckelelementen 23; 23', den Opferanoden 20; 20' und dem Hohlkörper 5, so dass über die Deckelemente 23; 23' zwischen den Opferanoden 20; 20' und dem Hohlkörper 5 der Vorrichtung 1 eine elektrisch leitende Verbindung jederzeit gewährleistet ist. Insbesondere erlaubt ein hier gezeigter Kontaktbereich zwischen der der Kavität K zugewandten Seite der Deckelelemente 23; 23' und den Opferanoden 20; 20' diese elektrisch leitende Verbindung. Mit anderen Worten erlauben hier die Deckelelemente 23; 23' eine elektrisch leitende Verbindung zwischen Hohlkörper 5 und den Opferanoden 20; 20', wobei jedoch alternativ auch eine elektrisch leitende Verbindung zwischen einschraubbaren Opferanoden 20; 20' und Hohlkörper 5 denkbar wäre ohne zusätzliche Deckelelemente 23; 23'. Somit befindet sich bei den in den Fig.1a bis 1c sowie Fig. 2 gezeigten ersten und zweiten bevorzugten Ausführungsformen - mittels einer elektrogalvanischen Wirkung durch unterschiedliche Materialpaarung bedingt - die Opferanoden 20; 20' und der Hohlkörper 5 in direktem, elektrisch leitenden Kontakt.

Alternativ ist es denkbar, dass die Opferanoden 20; 20' quadratische oder rechteckige Querschnitte aufweisen, wobei sich als Deckelelement 23; 23' eine Klemmplatte anbietet. Ein als Klemmplatte ausgebildetes Deckelelement 23; 23' könnte beispielsweise mittels einer Schraubverbindung mit dem Hohlkörper 5 verbindbar sein, wobei die obere Tellerfeder 22 und die untere Tellerfeder 22' hier im eingeschraubten Zustand Deckelelemente 23; 23' einen ausreichend hohen Anpressdruck erlauben.

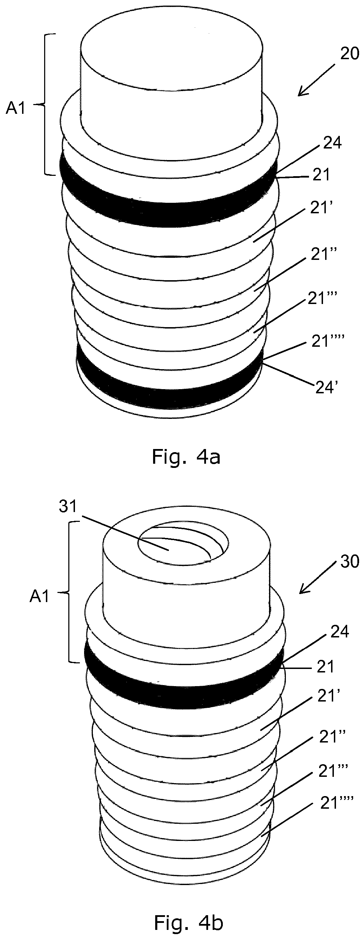

Empirische Messungen haben zudem vorteilhaft gezeigt, dass die Verwendung der oberen, zwischen Deckelelement 23; 23' und einer Seitenfläche S des Hohlkörpers 5 anbringbare, Tellerfeder 22 und der unteren Tellerfeder 22' im eingeschraubten Zustand der Deckelelemente 23; 23' beim ersten bevorzugten Typ einer Opferanode 20; 20' eine höhere Spannung erzeugen im Vergleich zu dem in Fig. 4b gezeigten zweiten bevorzugten Typ einer Opferanode 20, bei welchem auf der den Deckelelementen 23; 23' abgewandten Seite keine elektrisch leitende Verbindung zum Hohlkörper 5 besteht.

Die Opferanoden 20; 20' weisen hier eine Vielzahl von Rillen 21; 21'; 21"; 21'"; 21"", hier beispielhaft als Ringnuten ausgestaltet, auf. Fig. 2 zeigt im Weiteren hier beispielhaft einen oberen O-Ring 24 (z.B. aus Gummi) in einer obersten Rille 21 der Opferanoden 20; 20' sowie einen unteren O-Ring 24' (z.B. aus Gummi) in einer untersten Rille 21"" der Opferanoden 20; 20'.

Der obere O-Ring 24 dient vorteilhaft der Abdichtung zwischen Opferanoden 20; 20' und Deckelelementen 23; 23' insbesondere zwischen den Abschnitten A1 und A2, und verhindert insbesondere ein Eindringen der durchgeleiteten Flüssigkeit in den Kontaktbereich zwischen der der Kavität K zugewandten Seite der Deckelelemente 23; 23' und den Opferanoden 20; 20' beziehungsweise stellt hier einen «trockenen» Kontakt sicher. Aufgrund der Tatsache, dass ein solcher «trockener» Kontakt von der durchströmenden Flüssigkeit unbeeinflusst bleibt, wird zugleich vorteilhaft erzielt, dass an dieser Stelle kein Materialaufbau bzw. -abbau stattfinden kann. Durch das Verhindern eines Materialaufbaus aufgrund des «trockenen» Kontakt können die Opferanoden 20; 20' erleichtert ausgewechselt werden, im Gegensatz zu den eingangs erwähnten, bekannten Wasserbehandlungsvorrichtungen, bei welchen durch die zunehmenden Verschmutzungen verringerten Innendurchmesser des als Hohlkörper ausgestalteten Gehäuses eine verbrauchte Opferanode nur mit zerstörerischer Gewalt aus der Position gepresst werden kann.

Der untere O-Ring 24' dient vorteilhaft der Abdichtung des zur Aufnahme der Opferanoden 20; 20' vorgesehenen Sacklochs SL, und verhindert insbesondere ein Eindringen der Flüssigkeit F in das Sackloch SL zur Schaffung eines trockenen Kontakts zwischen den Opferanoden 20; 20' und dem Sackloch SL des Hohlkörpers 5.

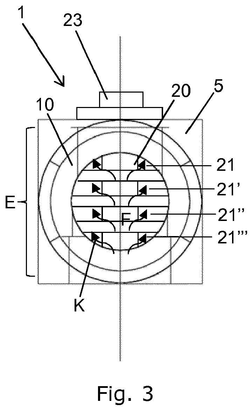

**Fig. 3** zeigt eine vom Einlass E her betrachtete Frontansicht einer bevorzugten Ausführungsform der erfindungsgemässen Vorrichtung 1 zur Wasserbehandlung, wobei eine Opferanode 20 mittels eines einschraubbaren Deckelelements 23 in der Kavität K der Vorrichtung 1 fest fixiert ist. Wie in Fig. 3 mittels Pfeilen illustriert kann die durchgeleitete Flüssigkeit F die in die Opferanode 20 eingebrachten, kreislinienförmige Durchtrittskanäle bildende Rillen 21; 21'; 21"; 21'" passieren, wobei vorteilhaft eine Wirbelbildung begünstigt wird. Im Gegensatz zu den in WO 94/17000 A1 gezeigten Wirbelkörpern mit geradlinigen Durchtrittkanäle wird bei solchen kreislinienförmigen Durchtrittkanälen eine besonders ausgeprägte Wirbelbildung erzielt.

Aufgrund des Bernoulli-Effekts erhöht sich zudem die Fliessgeschwindigkeit in den durch die Rillen 21; 21'; 21"; 21"' gebildeten Querschnittsverengungen, wodurch ein zusätzlicher Reinigungseffekt der Opferanoden 20; 20' erzielt wird und zusätzlich durch den erhöhten Druck im Bereich der Rillen 21; 21'; 21"; 21'" die elektrogalvanische Wirkung verbessert wird.

**Fig. 4a** zeigt eine schematische Seitenansicht eines ersten, bevorzugten Typs einer Opferanode 20; 20' für die erfindungsgemässe Vorrichtung 1 zur Wasserbehandlung, wobei dieser erste, bevorzugte Typ einer Opferanode 20; 20' bereits in Fig. 3 gezeigt wird. Die Opferanoden 20; 20' weisen hier eine Vielzahl von Rillen 21; 21'; 21"; 21'"; 21"", hier beispielhaft als Ringnuten ausgestaltet, auf. Fig. 2 zeigt im Weiteren hier beispielhaft einen oberen O-Ring 24 in einer obersten Rille 21 der Opferanoden 20; 20' zur Herstellung eines oberen trockenen Kontakts, sowie einen unteren O-Ring 24' in einer untersten Rille 21"" der Opferanoden 20; 20', wobei der untere O-Ring 24' jeweils einem unteren, in Fig. 1a erkennbaren Sackloch abdichtet und einen weiteren unteren trockenen Kontakt hergestellt.

**Fig. 4b** zeigt eine schematische Seitenansicht eines zweiten, bevorzugten Typs einer Opferanode 30 für die erfindungsgemässe Vorrichtung 1 zur Wasserbehandlung. Dieser Typ einer Opferanode 30 weist im ersten Abschnitt A1 auf der im eingebauten Zustand den Deckelelementen zugewandten Seite eine zweite Bohrung 31 mit einem Innengewinde auf, wobei bevorzugt ein zugehöriges Deckelelement ein Schraubenelement mit einem korrespondierenden Aussengewinde umfasst, d.h. ohne die Verwendung einer Tellerfeder an dieser Stelle. Lediglich ein oberer O-Ring 24 wird hier zur Abdichtung und Herstellung eines trockenen Kontakts benötigt, wodurch bei diesem Typ einer Opferanode 30 ein Stromfluss nur einseitig über das Deckelelement, nicht aber über das gegenüberliegende Sackloch stattfindet. Gemäss einer bevorzugten Weiterbildung des zweiten Typs einer Opferanode 30 ist der im eingebauten Zustand zum Sackloch hin zugewandte Bereich der Opferanode 30 derart dimensioniert, dass keine Berührung mit dem Hohlkörper 5 bzw. mit dem Sackloch des Hohlkörpers stattfindet zur Verhinderung eines Stromflusses in diesem Bereich.

Dieser in Fig. 4b gezeigte zweite Typ einer Opferanode 30 hat den Vorteil, dass Ersatzanoden als fertig verschraubte Einheiten verschickt und eingeschraubt werden könnten, ohne dass Elemente wie beispielsweise Tellerfedern (siehe Fig. 2) manuell zusätzlich wieder eingebracht werden müssten.

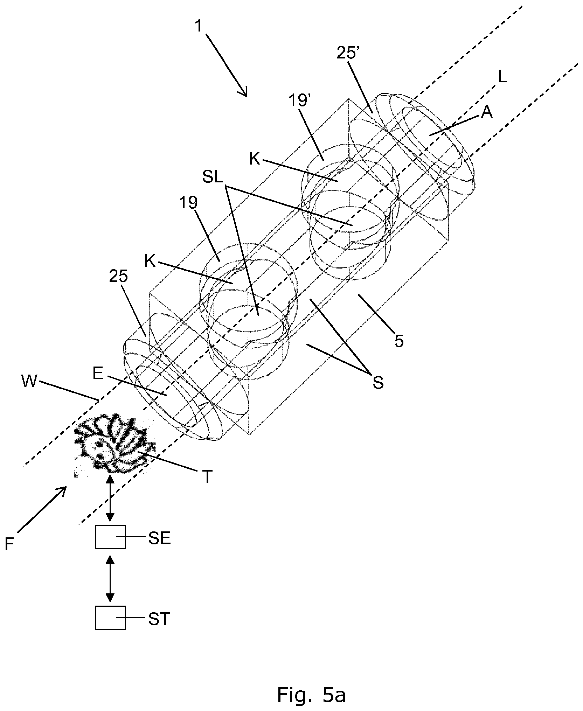

**Fig. 5a** zeigt eine schematische Explosionszeichnung einiger zusammenzusetzender Bestandteile der weiteren, bevorzugten Ausführungsform der erfindungsgemässen Vorrichtung zur Wasserbehandlung mit einer zusätzlichen elektrischen Energiequelle.

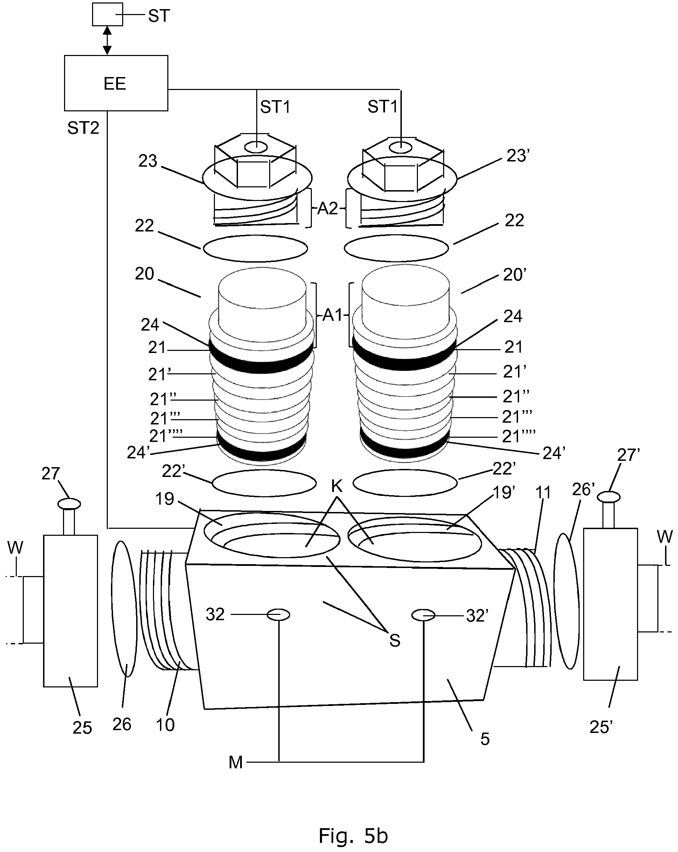

Wie in Fig. 5a ersichtlich kann im Wasserleitungsnetz W in Fliessrichtung der durchströmenden Flüssigkeit F betrachtet vor der Vorrichtung 1 eine Turbine T gekoppelt mit einem Sensor SE vorgesehen sein zur Messung der Fliessgeschwindigkeit der Flüssigkeit F. Im Zusammenhang mit einer in Fig. 5b im Detail beschriebenen zusätzlichen, elektrischen Energiequelle EE zur Erhöhung des Spannungsunterschieds können über an der Turbine T vorgesehene Magnete beim Drehen elektrische Impulse abgegeben werden, welche anhand einer Steuereinheit ST ausgewertet werden können. Dies erlaubt vorteilhaft, dass die Spannung durch die zusätzliche, elektrische Energiequelle EE je nach gemessener Fliessgeschwindigkeit einstellbar ist. Dies hat wiederum den weiteren Vorteil, dass die elektrogalvanische Wirkung abhängig vom realem Wasserverbrauch erhöht oder gedrosselt werden kann. Wenn kein Wasser verbraucht wird, findet auch keine elektrogalvanische Wirkung statt, da die Opferanode gemäss dieser dritten bevorzugten Ausführungsform von dem Hohlkörper 5 isoliert montiert ist. Mit anderen Worten fliesst elektrischer Strom bei der hier gezeigten, dritten bevorzugten Ausführungsform nur, wenn die Turbine T über den mit der Turbine gekoppelten Sensor SE eine Flüssigkeits- bzw. Wasserbewegung an die Steuereinheit ST meldet und die mit der Steuereinheit ST gekoppelte (siehe Fig. 5b), elektrische Energiequelle EE Spannung frei gibt. Ansonsten findet kein Stromfluss statt und somit auch kein unnützer Abbau der Zinkanode, was eine viel längere Lebensdauer garantiert.

Vorzugsweise ist die Steuereinheit ST derart ausgestaltet, so dass die Strommenge durch die Steuereinheit ST anhand der Flussgeschwindigkeit berechnet und permanent dem Bedarf angepasst wird. Dies hat den Vorteil, dass der Abbau der Zinkanode absolut bedarfsgerecht gesteuert wird. Dies ist gerade für grössere Wohneinheiten und die Industrie von grosser Wichtigkeit.

**Fig. 5b** zeigt eine schematische Explosionszeichnung einiger zusammenzusetzender Bestandteile einer weiteren, bevorzugten Ausführungsform der erfindungsgemässen Vorrichtung 1 zur Wasserbehandlung mit einer zusätzlichen elektrischen Energiequelle EE.

Wie in Fig. 5b ersichtlich kann gemäss dieser weiteren, bevorzugten Ausführungsform die Vorrichtung 1 zusätzliche Mittel zur Erhöhung des Spannungsunterschieds umfassen, wobei hier vorzugsweise dieses Mittel zur Erhöhung der Spannung durch eine erste Stromleitung ST1 zwischen einer zusätzlichen, elektrischen Energiequelle EE und einer jeweiligen Opferanode 20; 20' sowie zurück durch eine zweite Stromleitung ST2 zwischen dem Hohlkörper 5 und der zusätzlichen, elektrischen Energiequelle EE realisiert wird zur Bildung eines geschlossenen Stromkreises. Über jeweils sich bis 'in die Kavität K erstreckende, als Messpunkte fungierende Bohrungen 32; 32' sind Messsonden bzw. Messstifte M einführbar, anhand welcher der Spannungsunterschied zwischen der durchströmenden Flüssigkeit F, insbesondere Wasser, und dem als Gehäuse fungierenden Hohlkörper 5 gemessen werden kann.

Anhand von Bohrungen in den Deckelelementen 23; 23' die beiden hier gezeigten, ersten Stromleitungen ST1 (beispielsweise in Form eines Steckers oder Kabels) elektrisch mit den eingeschraubten Opferanoden 20; 20' verbunden.

Um das Risiko eines Kurzschlusses bei einer externen Stromzugabe von einer zusätzlichen, elektrischen Energiequelle EE zu verringern sind bei dieser weiteren, bevorzugten Ausführungsform die Opferanoden 20; 20' vollständig elektrisch isoliert gegenüber dem Hohlkörper 5, so dass der elektrische Strom lediglich über die durchströmende Flüssigkeit F, insbesondere Wasser, zwischen dem als Gehäuse ausgestalteten Hohlkörper 5 und den Opferanoden 20; 20' fliesst. Dies wird vorzugsweise erreicht, indem beispielsweise die Opferanoden 20; 20' im ersten Abschnitt A1 mit einer isolierenden Schutzkappe überzogen, wodurch eine elektrische Verbindung zwischen den Opferanoden 20; 20' und den mit dem Hohlkörper 5 im Kontakt stehenden Deckelelementen 23; 23' verhindert wird. Am gegenüberliegenden Ende der Opferanoden 20; 20' wird dies vorteilhaft erreicht, indem der im eingebauten Zustand zum Sackloch hin zugewandte Bereich der Opferanode 20; 20' derart dimensioniert ist, dass keine Berührung mit dem Hohlkörper 5 bzw. mit dem Sackloch des Hohlkörpers 5 stattfindet zur Verhinderung eines Stromflusses in diesem Bereich. Alternativ oder zusätzlich kann auch hier zum Sackloch hin eine Schutzkappe angebracht sein.

Diese weitere, dritte bevorzugte, in den Fig. 5a bzw. 5b gezeigte Ausführungsform der erfindungsgemässen Vorrichtung 1 zur Wasserbehandlung mit einer zusätzlichen elektrischen Energiequelle EE unterscheidet sich somit im Wesentlichen von den in den Fig. 1a bis 1c gezeigten, ersten und zweiten bevorzugten Ausführungsformen dadurch, dass bei der hier gezeigten dritten bevorzugten Ausführungsform elektrischer Strom lediglich über die Flüssigkeit F, insbesondere Wasser als leitendes Elektrolyt, zwischen Hohlkörper 5 und Opferanode 20; 20' fliesst, während bei der ersten und zweiten bevorzugten Ausführungsform zwischen Hohlkörper 5 und Opferanode 20; 20' ein direkter elektrischer Kontakt besteht.

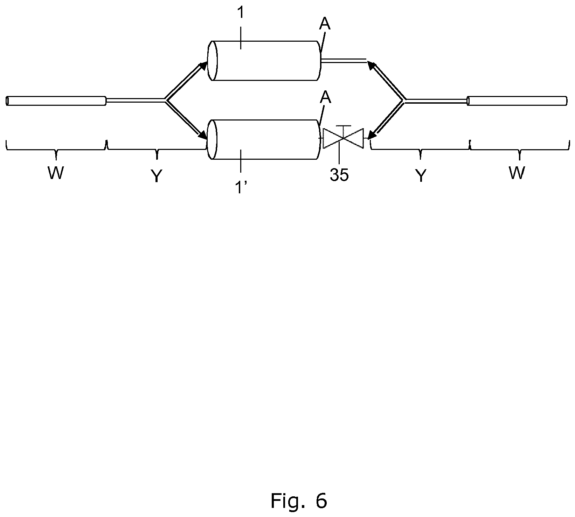

**Fig. 6** zeigt eine schematische Ansicht eines Systems mit einer Vielzahl erfindungsgemässer Vorrichtungen 1; 1'. Hierbei sind eine erste Vorrichtung 1 und mindestens eine zweite, hier exakt eine zweite, Vorrichtung 1' anhand eines einfachen Y-Verbindungstücks parallel zueinander geschaltet. In der vorliegenden parallelen Schaltung umfasst die zweite Vorrichtung 1' beim Auslass A ein verkehrt angeordnetes Rückschlagventil 35, während die erste Vorrichtung 1 kein Rückschlagventil aufweist.

Ein solches System hat den Vorteil, dass bei einem stark in der Menge schwankenden Wasserleitungsnetz W erst bei Erreichen eines kritischen Unterdrucks auf der Auslassseite A der zweiten Vorrichtung 1' (d.h. nach der Vorrichtung) das verkehrt angeordnete Rückschlagventil 35 öffnet und somit erst dann bedarfsmässig die zweite Vorrichtung 1' zugeschaltet wird.

### Bezugszeichenliste

1; 1' Vorrichtung zur Behandlung von Wasser
5 Hohlkörper
10 Einlassflansch
11 Auslassflansch
19; 19'; 19" Bohrung (für eine Opferanode)
20; 20'; 20" Opferanode (erster Typ einer Opferanode)
21; 21'; 21"; 21"'; 21"" Rille (in der Opferanode)
22; 22' Oberer / unterer Federring
23; 23' Deckelelement
24; 24' Oberer / unterer O-Ring (zur Abdichtung zwischen Opferanode und Hohlkörper)
25; 25' Erstes / zweites Anschlussstück (zwischen Flansch und Wasserleitungsnetz)
26; 26' Dichtungsring
27; 27' Erster / zweiter Absperrhahn
30 Opferanode (zweiter Typ einer Opferanode)
31 zweite Bohrung (in zweitem Typ einer Opferanode)
32; 32' Bohrungen (als Messpunkte fungierend)
35 Rückschlagventil
α Verdrehwinkel (der Opferanoden seitlich um die Längsachse L herum verdreht)
β Kippwinkel (der Opferanoden quer zur Erstreckung der Längsachse L)
A Auslass
A1 Erster Abschnitt (der Opferanode)
A2 Zweiter Abschnitt (des Deckelelements)
E Einlass
EE Elektrische Energiequelle (zur externen Spannungszufuhr)
F Flüssigkeit
K Kavität
L Längsachse (der Vorrichtung)
LO Erster Lochdurchgang (in Sackloch SL)
LO' Zweiter Lochdurchgang (in Deckelelementen)
M Messsonde
S Seitenfläche (des Hohlkörpers)
SE Sensor
SL Sackloch
ST Steuereinheit
ST1 Erste Stromleitung (zwischen elektrischer Energiequelle und Opferanode)
ST2 Zweite Stromleitung (zwischen Hohlkörper und elektrischer Energiequelle)
T Turbine
W Wasserleitungsnetz
Y Y-Verbindungsstück

## Patentansprüche

1. Vorrichtung (1) zur Behandlung von Flüssigkeiten (F), insbesondere zur Behandlung von, insbesondere kalkhaltigem, Wasser innerhalb eines Wasserleitungsnetzes (W), umfassend:
- einen, insbesondere metallischen, zylindrischen Hohlkörper (5),
- einen, durch eine Bohrung im Hohlkörper (5) gebildeten, Einlass (E),
- einen, durch eine Bohrung im Hohlkörper (5) gebildeten, Auslass (A),
- mehrere metallische Opferanoden (20; 20'; 30),
wobei im Hohlkörper (5) zwischen dem Einlass (E) und dem Auslass (A) eine Kavität (K) zum Durchleiten der Flüssigkeit (F) ausgebildet ist,
**dadurch gekennzeichnet, dass**
die metallischen Opferanoden (20; 20'; 30) über jeweils eine zusätzliche Bohrung (19; 19'; 19") in die Kavität (K) im Hohlkörper (5) einbringbar und befestigbar sind, so dass die Opferanoden (20; 20'; 30) mit dem Hohlkörper (5) verbunden sind, wobei die Bohrungen (19; 19'; 19") für die Aufnahme der Opferanoden (20; 20'; 30) in Serie nacheinander, d.h. im Wesentlichen entlang einer Längsachse (L) der Vorrichtung (1), angeordnete sind.

2. Vorrichtung (1) nach Patentanspruch 1,
**dadurch gekennzeichnet, dass**
die metallischen Opferanoden (20; 20'; 30) die Kavität (K) querend im Hohlkörper (5) einbringbar und befestigbar sind, so dass die metallischen Opferanoden (20; 20'; 30) im Wesentlichen vertikal zur durchströmenden Flüssigkeit (F) angeordnet sind.

3. Vorrichtung (1) nach Patentanspruch 1 oder 2,
**dadurch gekennzeichnet, dass**
die nacheinander folgenden Bohrungen (19; 19', 19") für die Aufnahme der Opferanoden (20; 20'; 30) und damit die Opferanoden (20; 20'; 30) um einige Winkelgrade seitlich gegeneinander um die Längsachse (L) herum verdreht angeordnet sind, vorzugsweise um einen Verdrehwinkel α von 10° bis 30° gegenüber der jeweils benachbarten Opferanode.

4. Vorrichtung (1) nach einem der vorherigen Patentansprüche,
**dadurch gekennzeichnet, dass**
die Vorrichtung (1) mindestens eine, vorzugsweise als Ringnut ausgestaltete, Rille (21; 21'; 21"; 21'") und / oder Schlitzen und / oder zusätzlichen zentrischen oder exzentrischen Bohrungen in der Opferanode (20; 20'; 30) umfasst, wobei die mindestens eine Rille (21; 21'; 21"; 21"') ein Passieren der in der Vorrichtung (1) durchgeleiteten Flüssigkeit (F) erlaubt.

5. Vorrichtung (1) nach einem der vorherigen Patentansprüche,
**dadurch gekennzeichnet, dass**
die Bohrungen (19; 19'; 19") für die Aufnahme der Opferanoden (20; 20'; 30) jeweils in einem Sackloch (SL) enden,

6. Vorrichtung (1) nach einem der vorherigen Patentansprüche,
**dadurch gekennzeichnet, dass**
die zusätzlichen Bohrungen (19; 19'; 19") für die Aufnahme der Opferanoden (20; 20'; 30) jeweils ein Innengewinde aufweisen, welches mit jeweils einem korrespondierenden, an Deckelelementen (23; 23') vorgesehenen Aussengewinde ein Einschrauben der Deckelelemente (23; 23') zur Befestigung der Opferanoden (20; 20'; 30) in der Kavität (K) des Hohlkörpers (5) ermöglicht.

7. Vorrichtung (1) nach Patentanspruch 5 und 6,
**dadurch gekennzeichnet, dass**
zwischen Deckelement (23; 23') und Opferanode (20; 20') eine obere Tellerfeder (22) und im Sackloch (SL) eine untere Tellerfeder (22') angeordnet ist, welche im eingeschraubten Zustand der Deckelelemente (23; 23') einen ausreichend hohen Anpressdruck zwischen den Deckelelementen (23; 23'), den Opferanoden (20; 20') und dem Hohlkörper (5) erlauben, so dass über die Deckelemente (23; 23') und das Sackloch (SL) zwischen den Opferanoden (20; 20') und dem Hohlkörper (5) der Vorrichtung (1) eine elektrisch leitende Verbindung gewährleistet ist.

8. Vorrichtung (1) nach Patentanspruch 7,
**dadurch gekennzeichnet, dass**
die Opferanoden (20; 20') jeweils einen oberen O-Ring (24) und eine unteren O-Ring (24') zur Herstellung eines oberen resp. unteren trockenen Kontakts aufweisen.

9. Vorrichtung (1) nach einem der Patentansprüche 6 bis 7,
**dadurch gekennzeichnet, dass**
die Deckelelemente (23; 23') einen angeformten, zweiten Abschnitt (A2) auf mit einem, durch eine Kavität gebildeten, Aufnahmebereich umfassen, wobei ein korrespondierender erster Abschnitt (A1) in den Aufnahmebereich des zweiten Abschnitts (A2) aufnehmbar ist.

10. Vorrichtung (1) nach einem der Patentansprüche 6 bis 7,
**dadurch gekennzeichnet, dass**
ein weiterer Typ einer Opferanode (30) im ersten Abschnitt (A1) auf der im eingebauten Zustand den Deckelelementen (23; 23') zugewandten Seite eine zweite Bohrung (31) mit einem Innengewinde aufweist, wobei ein zugehöriges Deckelelement (23; 23') ein Schraubenelement mit einem korrespondierenden Aussengewinde umfasst.

11. Vorrichtung (1) nach einem der vorherigen Patentansprüche,
**dadurch gekennzeichnet, dass**
die Vorrichtung (1) beim Einlass (E) und / oder beim Auslass (A) einen Absperrhahn (27; 27') umfasst, wobei der Absperrhahn (27; 27') ein Durchleiten der Flüssigkeit (F) durch die Kavität (K) des Hohlkörpers (5) verhindert.

12. Vorrichtung (1) insbesondere nach einem der vorherigen Patentansprüche,
**dadurch gekennzeichnet, dass**
die Vorrichtung (1) zusätzliche Mittel zur Erhöhung des Spannungsunterschieds umfasst, die vorzugsweisedurch eine erste Stromleitung (ST1) zwischen einer zusätzlichen, elektrischen Energiequelle und einer jeweiligen Opferanode (20; 20'; 30) sowie einer zweiten Stromleitung (ST2) zwischen dem Hohlkörper (5) und der zusätzlichen, elektrischen Energiequelle (EE) realisiert gebildet wird.

13. Vorrichtung (1) nach Patentanspruch 12,
**dadurch gekennzeichnet, dass**
die Vorrichtung (1) derart ausgestaltet ist, so dass die Opferanoden (20; 20'; 30) vollständig elektrisch isoliert gegenüber dem Hohlkörper 5 sind, so dass der elektrische Strom lediglich über die durchströmende Flüssigkeit F, insbesondere Wasser, zwischen dem als Gehäuse ausgestalteten Hohlkörper 5 und den Opferanoden 20; 20' fliesst.

14. Vorrichtung (1) nach einem der Patentansprüche 13 bis 14,
**dadurch gekennzeichnet, dass**
die Vorrichtung (1) eine Turbine (T) gekoppelt mit einem Sensor (SE) zur Messung der Fliessgeschwindigkeit der Flüssigkeit (F) umfasst, wobei die Spannung durch eine zusätzliche, elektrische Energiequelle (EE) je nach gemessener Fliessgeschwindigkeit einstellbar ist.

15. System umfassend eine Vielzahl von Vorrichtungen (1) nach einem der vorherigen Patentansprüche, wobei die Vorrichtungen (1) anhand eines, einfachen oder doppelten, Y-Verbindungstücks (Y) parallel zueinander geschaltet werden und wobei in der parallelen Schaltung eine zweite (1') und allfällige weitere Vorrichtungen beim Auslass (A) mindestens ein verkehrt angeordnetes Rückschlagventil (35) umfasst, während eine erste Vorrichtung kein Rückschlagventil aufweist.

## Claims

1. A device (1) for the treatment of liquids (F), particularly for the treatment of, particularly calcareous, water within a water supply network (W), comprising:
- a, particularly metallic, cylindrical hollow body (5),
- an inlet (E) formed by a bore in the hollow body (5),
- an outlet (A) formed by a bore in the hollow body (5),
- a plurality of metallic sacrificial anodes (20; 20'; 30),
a cavity (K) for the passage of the liquid (F) being formed in the hollow body (5) between the inlet (E) and the outlet (A),
**characterized in that**
the metallic sacrificial anodes (20; 20'; 30) can be introduced and fastened into the cavity (K) in the hollow body (5) each via an additional bore (19; 19'; 19") so that the sacrificial anodes (20; 20'; 30) are connected to the hollow body (5), wherein the bores (19; 19'; 19") for receiving the sacrificial anodes (20; 20'; 30) are arranged in series one after the other, that is, essentially along a longitudinal axis (L) of the device (1).

2. The device (1) according to claim 1,
**characterized in that**
the metallic sacrificial anodes (20; 20'; 30) can be introduced and fastened in the hollow body (5) crossing the cavity (K) so that the metallic sacrificial anodes (20; 20'; 30) are arranged essentially vertically to the liquid (F) flowing through.

3. The device (1) according to claim 1 or 2,
**characterized in that**
the bores (19; 19', 19") following one another for receiving the sacrificial anodes (20; 20'; 30) and thus the sacrificial anodes (20; 20'; 30) are arranged rotated by a few degrees laterally opposite one another around the longitudinal axis (L), preferably by an angle of rotation a of 10° to 30° with respect to the respective adjacent sacrificial anode.

4. The device (1) according to any one of the preceding claims,
**characterized in that**
the device (1) comprises at least one groove (21; 21'; 21"; 21"'), preferably designed as an annular groove, and/or slots and/or additional central or eccentric bores in the sacrificial anode (20; 20'; 30), wherein the at least one groove (21; 21'; 21"; 21"') allows the liquid (F) passing through in the device (1) to pass.

5. The device (1) according to any one of the preceding claims, **characterized in that** the bores (19; 19'; 19") for receiving the sacrificial anodes (20; 20'; 30) each end in a blind hole (SL).

6. The device (1) according to any one of the preceding claims,
**characterized in that**
the additional bores (19; 19'; 19") for receiving the sacrificial anodes (20; 20'; 30) each comprise an internal thread which, with a corresponding external thread provided on the cover elements (23; 23'), enables the cover elements (23; 23') to be screwed in for fastening the sacrificial anodes (20; 20'; 30) in the cavity (K) of the hollow body (5).

7. The device (1) according to claims 5 and 6,
**characterized in that**
an upper plate spring (22) is arranged between the cover element (23; 23') and the sacrificial anode (20; 20') and a lower plate spring (22') is arranged in the blind hole (SL), which, in the screwed-in state of the cover elements (23; 23'), allow a sufficiently high contact pressure between the cover elements (23; 23'), the sacrificial anodes (20; 20') and the hollow body (5), so that an electrically conductive connection is ensured between the sacrificial anodes (20; 20') and the hollow body (5) of the device (1) via the cover elements (23; 23') and the blind hole (SL).

8. The device (1) according to claim 7,
**characterized in that**
the sacrificial anodes (20; 20') each comprise an upper O-ring (24) and a lower O-ring (24') for producing an upper or lower dry contact.

9. The device (1) according to any one of claims 6 to 7,
**characterized in that**
the cover elements (23; 23') comprise an integrally formed, second section (A2) having a receiving region formed by a cavity, wherein a corresponding first section (A1) is receivable in the receiving region of the second section (A2).

10. The device (1) according to any one of claims 6 to 7,
**characterized in that**
a further type of sacrificial anode (30) in the first section (A1) on the side facing the cover elements (23; 23') in the installed state comprises a second bore (31) having an internal thread, wherein an associated cover element (23; 23') comprises a screw element having a corresponding external thread.

11. The device (1) according to any one of the preceding claims,
**characterized in that**
the device (1) at the inlet (E) and/or at the outlet (A) comprises a stopcock (27; 27'), wherein the stopcock (27; 27') prevents a passage of the liquid (F) through the cavity (K) of the hollow body (5).

12. The device (1) particularly according to any one of the preceding claims,
**characterized in that**
the device (1) comprises additional means for increasing the voltage difference, which is preferably formed by a first power line (ST1) between an additional electrical energy source and a respective sacrificial anode (20; 20'; 30) and a second power line (ST2) between the hollow body (5) and the additional electrical energy source (EE).

13. The device (1) according to claim 12,
**characterized in that**
the device (1) is designed in such a way that the sacrificial anodes (20; 20'; 30) are completely electrically insulated from the hollow body (5), so that the electrical current flows only via the flowing liquid (F), particularly water, between the hollow body (5) designed as a housing and the sacrificial anodes (20; 20').

14. The device (1) according to any one of claims 13 to 14,
**characterized in that**
the device (1) comprises a turbine (T) coupled with a sensor (SE) for measuring the flow rate of the liquid (F), wherein the voltage is adjustable by an additional electrical energy source (EE) depending on the measured flow rate.

15. A system comprising a plurality of devices (1) according to any one of the preceding claims, the devices (1) being connected in parallel to one another using a single or double Y-connection piece (Y) and, in the parallel circuit, a second (1') and any further devices at the outlet (A) comprising at least one non-return valve (35) arranged inverted, while a first device does not comprise a non-return valve.

## Revendications

1. Dispositif (1) pour le traitement de liquides (F), en particulier pour le traitement d'eau, en particulier calcaire, à l'intérieur d'un réseau de canalisations d'eau (W), comprenant :
- un corps creux (5) cylindrique, en particulier métallique,
- une entrée (E) formée par un perçage dans le corps creux (5),
- une sortie (A) formée par un perçage dans le corps creux (5),
- plusieurs anodes sacrificielles métalliques (20 ; 20' ; 30),
dans lequel une cavité (K) pour diriger un liquide (F) est formée dans le corps creux (5) entre l'entrée (E) et la sortie (A),
**caractérisé en ce que**
les anodes sacrificielles métalliques (20 ; 20' ; 30) peuvent être introduites et fixées dans la cavité (K) dans le corps creux (5) par respectivement un perçage supplémentaire (19 ; 19', 19'') de sorte que les anodes sacrificielles (20 ; 20' ; 30) soient reliées au corps creux (5), dans lequel les perçages (19 ; 19', 19'') sont disposés en série l'un après l'autre, c'est-à-dire essentiellement le long d'un axe longitudinal (L) du dispositif (1), pour recevoir les anodes sacrificielles métalliques (20 ; 20' ; 30) .

2. Dispositif (1) selon la revendication 1, **caractérisé en ce que**
les anodes sacrificielles métalliques (20 ; 20' ; 30) peuvent être introduites et fixées dans la cavité (K) transversalement dans le corps creux (5), de sorte que les anodes sacrificielles métalliques (20 ; 20' ; 30) soient disposées essentiellement verticalement au liquide (F) en circulation.

3. Dispositif (1) selon la revendication 1 ou 2,
**caractérisé en ce que**
les perçages (19 ; 19', 19'') disposés l'un après l'autre pour recevoir les anodes sacrificielles (20 ; 20' ; 30), et ainsi les anodes sacrificielles (20 ; 20' ; 30), sont disposés tournés de quelques degrés latéralement l'un contre l'autre sur l'axe longitudinal (L), de préférence dans un angle de rotation α de 10° à 30° par rapport à l'anode sacrificielle voisine respective.

4. Dispositif (1) selon l'une des revendications précédentes, **caractérisé en ce que** le dispositif (1) comprend au moins une encoche (21 ; 21' ; 21" ; 21''') formée en tant que rainure annulaire, et/ou des fentes et/ou des perçages centrés ou décentrés supplémentaires dans l'anode sacrificielle (20 ; 20' ; 30), dans lequel l'au moins une encoche (21 ; 21' ; 21" ; 21"') permet un passage du liquide (F) dirigé dans le dispositif (1) .

5. Dispositif (1) selon l'une des revendications précédentes, **caractérisé en ce que** les perçages (19 ; 19', 19'') pour recevoir les anodes sacrificielles (20 ; 20' ; 30) terminent respectivement dans un trou borgne (SL).

6. Dispositif (1) selon l'une des revendications précédentes, **caractérisé en ce que** les perçages (19 ; 19', 19'') supplémentaires pour recevoir les anodes sacrificielles (20 ; 20' ; 30) présentent respectivement un filet femelle, lequel permet, avec respectivement un filet mâle correspondant prévu sur des éléments de couvercle (23 ; 23'), de visser les éléments de couvercle (23 ; 23') pour fixer les anodes sacrificielles (20 ; 20' ; 30) dans la cavité (K) du corps creux (5).

7. Dispositif (1) selon la revendication 5 ou 6, **caractérisé en ce qu'**une rondelle-ressort supérieure (22) est disposée entre l'élément de couvercle (23 ; 23') et l'anode sacrificielle (20 ; 20') et une rondelle-ressort inférieure (22') est disposée dans le trou borgne (SL), lesquelles dans l'état vissé des éléments de couvercle (23 ; 23'), permettent une pression d'appui suffisamment élevée entre les éléments de couvercle (23 ; 23'), les anodes sacrificielles (20 ; 20') et le corps creux (5), de sorte qu'une liaison électrique conductrice soit garantie entre les anodes sacrificielles (20 ; 20') et le corps creux (5) du dispositif (1) par le biais des éléments de couvercle (23 ; 23') et du trou borgne (SL).

8. Dispositif (1) selon la revendication 7, **caractérisé en ce que** les anodes sacrificielles (20 ; 20') présentent respectivement un joint torique supérieur (24) et un joint torique inférieur (24') pour produire un contact sec supérieur, respectivement, inférieur.

9. Dispositif (1) selon l'une des revendications 6 à 7, **caractérisé en ce que** les éléments de couvercle (23 ; 23') présentent un second tronçon (A2) formé comprenant une zone de réception formée par une cavité, dans lequel un premier tronçon (A1) correspondant peut être reçu dans la zone de réception du second tronçon (A2).

10. Dispositif (1) selon l'une des revendications 6 à 7, **caractérisé en ce qu'**un autre type d'une anode sacrificielle (30) dans le premier tronçon (A1) présente sur le côté tourné vers les éléments de couvercle (23 ; 23') dans l'état monté, un second perçage (31) avec un filet femelle, dans lequel un élément de couvercle (23 ; 23') en faisant partie comprend un élément de vis avec un filet mâle correspondant.

11. Dispositif (1) selon l'une des revendications précédentes, **caractérisé en ce que** le dispositif (1) comprend un robinet d'arrêt (27 ; 27') en entrée (E) et/ou en sortie (A), dans lequel le robinet d'arrêt (27 ; 27') empêche un passage du liquide (F) à travers la cavité (K) du corps creux (5).

12. Dispositif (1) en particulier selon l'une des revendications précédentes, **caractérisé en ce que** le dispositif (1) comprend des moyens supplémentaires pour augmenter la différence de tension, qui sont formés de préférence par une première ligne de courant (ST1) entre une source d'énergie électrique supplémentaire et une anode sacrificielle (20 ; 20' ; 30) respective ainsi qu'une seconde ligne électrique (ST2) entre le corps creux (5) et la source (EE) d'énergie électrique supplémentaire.

13. Dispositif (1) selon la revendication 12, **caractérisé en ce que** le dispositif (1) est ainsi conçu que les anodes sacrificielles (20 ; 20' ; 30) sont complètement isolées électriquement par rapport au corps creux (5), de sorte que le courant électrique ne circule que par le liquide (F) qui s'écoule, en particulier de l'eau, entre le corps creux (5) formé en tant que logement et les anodes sacrificielles (20 ; 20').

14. Dispositif (1) en particulier selon l'une des revendications 13 à 14, **caractérisé en ce que** le dispositif (1) comprend une turbine (T) couplée à un capteur (SE) pour mesurer la vitesse d'écoulement du liquide (F), dans lequel la tension peut être réglée par une source (EE) d'énergie électrique supplémentaire en fonction de la vitesse d'écoulement mesurée.

15. Système comprenant une pluralité de dispositifs (1) selon l'une des revendications précédentes, dans lequel les dispositifs (1) sont montés parallèles entre eux à l'aide d'un raccord de liaison (Y) en Y simple ou double, et dans lequel dans le montage parallèle, un second (1') et éventuellement d'autres dispositifs comprennent en sortie (A) au moins un clapet anti-retour (35) disposé inversé, tandis qu'un premier dispositif ne présente aucun clapet anti-retour.
